(19) Europäisches Patentamt
European Patent Office
Office européen des brevets

(11) **EP 4 148 733 A1**

(12) **EUROPEAN PATENT APPLICATION**

(43) Date of publication:
**15.03.2023 Bulletin 2023/11**

(21) Application number: **22190206.7**

(22) Date of filing: **12.08.2022**

(51) International Patent Classification (IPC):
**G11B 7/1374** (2012.01)　　**G11B 7/1378** (2012.01)

(52) Cooperative Patent Classification (CPC):
**G11B 7/1374; G02B 1/002; G02B 5/1876; G11B 7/0065; G11B 7/1378**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **12.08.2021　CN 202110924740**

(71) Applicant: **Amethystum Storage Technology Co., Ltd.**
**Meizhou, Guangdong 514700 (CN)**

(72) Inventors:
• **HU, Dejiao**
**Shejiang Town, Mei County Meizhou,, 514700 (CN)**
• **LIU, Yicheng**
**Shejiang Town, Mei County Meizhou, 514700 (CN)**
• **TIAN, Jun**
**Shejiang Town, Mei County Meizhou, 514700 (CN)**
• **TAO, Xiaoxiao**
**Shejiang Town, Mei County Meizhou, 514700 (CN)**

(74) Representative: **Puschmann Borchert Kaiser Klettner**
**Patentanwälte Partnerschaft mbB**
**Bajuwarenring 21**
**82041 Oberhaching (DE)**

(54) **OPTICAL SYSTEM FOR HOLOGRAPHIC STORAGE AND DESIGN METHOD FOR FRESNEL LENS AND META LENS THEREOF**

(57)　An optical system for holographic storage includes a reference light path (1), a signal light path, a servo light path (3) and a reproduction light path (4). The reference light path (1) and the signal light path (2) both contain a first Fourier lens (10) and a second Fourier lens (20) for transmitting reference light and signal light carrying data information, and adjusting the incident position and angle of the reference light and the signal light on a storage medium. The optical system further includes a reference light objective lens (50) for converging the reference light, a third Fourier lens (30) for performing Fourier transformation on a signal light field, and a fourth Fourier lens (40) for performing Fourier transformation on a reproduced signal light field to read the data information. The first Fourier lens (10), the second Fourier lens (20), the third Fourier lens (30), the fourth Fourier lens (40) and the reference light objective lens (50) is respectively a Fresnel lens or a meta lens.

meta lens

OR

common optical lens group

Fresnel lens

FIG. 1

EP 4 148 733 A1

## Description

## TECHNICAL FIELD

The present invention relates to the field of holographic storage, and particularly relates a lens used in holographic storage, and particularly relates to an optical system for holographic storage and a Fresnel lens or a meta lens thereof.

## BACKGROUND

The common optical storage technology, such as DVD and blue light optical storage, that has been widely used at present, achieves data recording by forming a reflectivity difference with laser thermal effect ablating materials on an optical track. The optical system thereof is required to focus the incident laser light at a certain distance inside the storage medium into a single diffraction-limited converging light spot. The horizontal and vertical dimensions of the light field thereof are about in the order of hundreds of nanometers.

However, holographic storage has many features. In holographic storage, a reference light and a signal light are interfered inside the recording medium to form interference fringes in three-dimensional distribution with a certain volume, and the fringes are recorded inside the photosensitive medium through photochemical reactions. Compared with the common optical storage, two stable light beams are required, so that the optical system of the holographic storage is much complex. In addition, in the optical system of the holographic storage, the field of reference light and signal light generated inside the medium have larger size. Compared with recording by the ablation effect, the light field of the holographic optical storage is required better uniformity to ensure uniform exposure within the range of the light field, which thus has higher requirements for the optical system. According to the holographic storage, the two-dimensional data page image is loaded into the signal light and is recorded into the medium to form a hologram by interfering the signal light with the reference light, the signal light carrying the data information can be reproduced by irradiating the hologram with the reference light, and the two-dimensional data page image is projected onto an image sensor through the optical system. In the whole process, in order to record, reproduce and transmit information of the two-dimensional data page image completely, the optical system is required to have better imaging characteristics, i.e. a larger aperture is required, and it is also required to eliminate large view field aberration of the optical system, such as spherical aberration, chromatic aberration, coma, distortion, field curvature, astigmatism, etc. Accordingly, each optical objective lens in the optical system of the holographic storage is composed of a lens group including a plurality of lenses, which has large volume and mass. Further, in order to ensure that the two light beams are always irradiated at the exact position during process of recording and reproducing hologram, a servo system is thus provided to correct deviation of the light beams relative to the storage medium by moving or rotating one or more lenses or lens group in the optical system in real time. Therefore, it is required that reduction of the volume and mass of the lenses or lens group will not affect the optical performance, so as to ensure the response frequency and response speed in the correction process and reduce aberration in the process of moving or rotating the lens or lens group. The lens or lens group in the holographic storage has much function, for example, the Fourier lens therein is configured for transforming the light field of the two-dimensional data page into a spectral plane to realize holographic recording of Fourier transformation, the objective lens for reference light is configured for focusing the reference light, and the magnification lens is configured for matching the pixel sizes of a spatial light modulator and an image sensor.

As such, the optical system of the holographic storage is more complex, and function of the optical components is much richer. Therefore, in order to realize miniaturization and integration of holographic storage device, optimization and improvement for optical components should be conducted under the requirements of function and performance thereof.

As known, the Fresnel lens can realize convergence or divergence of the incident light beam by phase modulation to the incident light beam using a small curved surface in the shape of an annular band. The meta lens is a kind of special super-surface structure, which is a planar optical element composed of optical nanometer antennae, and can precisely control multiple parameters, such as phase, amplitude and polarization direction of light. Both the Fresnel lens and the meta lens have the advantages of flexible design, small mass, planarization and a compact structure. Accordingly, two-dimensional phase modulation satisfying the aberration elimination property can be obtained through theoretical design or simulation optimization, and the Fresnel lens or the meta lens manufactured according to the phase modulation has an optical performance similar to that of a lens group consisting of a plurality of lenses.

Therefore, it is of great significance to apply the Fresnel lens or the meta lens in the optical system of the holographic storage.

## SUMMARY

The present invention thus provides an optical system for holographic storage, and a Fresnel lens or meta lens thereof, which is free from the aforesaid drawbacks and can realize miniaturization and integration of the holographic storage system.

The optical system according to the present invention includes a reference light path, a signal light path, a servo light path and a reproduction light path. The reference light path and the signal light path both contains a first Fourier lens and a second Fourier lens for transmitting a reference light and a signal light carrying data information and adjusting the incident position and angle of the reference light and the signal light on a storage medium. The optical system further includes a reference light objective lens for converging the reference light, a third Fourier lens for performing Fourier transformation on a signal light field, and a fourth Fourier lens for performing Fourier transformation on a reproduced signal light field to read the data information. The first Fourier lens, the second Fourier lens, the third Fourier lens, the fourth Fourier lens and the reference light objective lens is respectively composed of a Fresnel lens or a meta lens.

The Fourier lens has the function requirement of transmitting data information completely, while the reference light objective lens requires a higher numerical aperture and a larger working distance, so apertures thereof are larger. Meanwhile, since it is necessary to eliminate the influence of aberration, the Fourier lens and the reference light objective lens are generally a lens group consisting of a plurality of lenses, which are large in both volume and mass. However, it can considerably reduce when designed as the Fresnel lens or the meta lens. On the one hand, the reduction of the volume and mass facilitates miniaturization of the entire holographic optical storage system; on the other hand, it is advantageous to compensate for the expansion or contraction and deviation of an optical disk by controlling the movement of the lens through a servo system. The expansion or contraction of the holographic optical disk includes volume contraction due to polymerization of photopolymer monomers into macromolecules after writing in data and a volume change due to a temperature change, such volume change may cause a change to the holographic grating. The deviation of the optical disk then includes translational deviation in the direction of three axes and angular deviation around the three axes. In order to compensate for the effects of the volume change and the deviation of the holographic optical disk to fully reproduce the stored data information, compensation may be performed by controlling the movement or rotation of the lens, such as the second Fourier lens or other lens on the light path. Moreover, in order to facilitate control and achieve fast response, the volume and mass of these lenses should be reduced as much as possible, accordingly, replacing a conventional lens or lens group with the Fresnel lens and the meta lens is an important or even the unique method.

According to one embodiment, the optical system further includes a servo light calibration lens for calibrating a servo light spot, and the servo light calibration lens is a Fresnel lens or a meta lens.

The servo light calibration lens is used for adjusting the position of a convergence light spot for a servo light. In the light path calibration process, the calibration lens needs to be moved frequently to complete the focusing of the servo light. The Fresnel lens or the meta lens replacing a calibration lens made of an ordinary lens thus can greatly reduce the volume and mass of the lens, and is more conducive to the rapid movement of the calibration lens.

According to one embodiment, the optical system further includes a servo light objective lens for focusing the servo light, and the servo light objective lens is a Fresnel lens or a meta lens.

The configuration of the servo light objective lens is composed of the Fresnel lens or the meta lens can simplify the volume of the lens, reduce the mass of the lens, facilitate the miniaturization and integration of the system, and facilitate the rapid movement of the servo light objective lens.

According to one embodiment of the present invention, the optical system further includes a magnification lens for matching pixel sizes of a spatial light modulator and an image sensor, and the magnification lens is a Fresnel lens or a meta lens.

According to one embodiment of the present invention, the reference light path and the signal light path comprise a beam expanding collimating lens group for performing beam expanding on the reference light and the signal light, and the beam expanding collimating lens group is composed of a Fresnel lens or a meta lens. Such configuration can reduce the volume and facilitate miniaturization and integration of the system.

According to one embodiment of the present invention, the optical system further includes an astigmatic cylindrical lens for detecting the defocus condition of the servo light by astigmatism, and the astigmatic cylindrical lens is a Fresnel lens or a meta lens.

According to one embodiment of the present invention, after the reference light passes through the reference light objective lens, the reference light changes in direction and converges to the signal light at a certain angle.

According to one embodiment of the present invention, after the signal light passes through the third Fourier lens, the signal light changes in direction and converges to the reference light at a certain angle.

In an off-axis optical system, the signal light and the reference light are incident on the holographic optical disk at a certain angle. When a conventional lens or lens group is used as the third Fourier lens and the reference light objective lens, there must be an included angle between the optical axes of the two lights. Such structure may cause that if a servo effect is realized by controlling the two lenses or lens groups, the two lenses or lens groups must move along their respective optical axes, so the movement thereof cannot be realized by using a uniform driving mechanism and cannot be synchronously adjusted. What's more, it is difficult to use a lens or lens group with a large numerical aperture because the two lenses or lens groups are placed at a certain included angle and the front surfaces thereof cannot be attached to the holographic optical disk at the same time. However, by using the Fresnel lens or the meta lens, the effect of deflecting and converging light beams perpendicularly irradiating the lens in the side direction can be achieved by superimposing an inclined phase, so that the third Fourier lens and the reference light objective lens can be placed on the same plane side by side. In the case where both the signal light and the reference light perpendicularly irradiate the two lenses, the transmitted signal light and the transmitted reference light can superimpose and interfere with each other on the holographic optical disk at a certain angle. Thus, the movement of the two lenses in the same direction can be synchronously adjusted, and both of the two lenses can be attached to the holographic optical disk at a close distance to achieve a high numerical aperture.

The present invention further provides a design method for a Fresnel lens and a meta lens used in the optical system for holographic storage mentioned above, which includes the following steps:

S1. optimizing the optical design of the holographic optical storage light path system to obtain a lens or a lens group meeting the optical performance requirements;
S2. extracting a phase distribution accumulated after parallel light passes through the lens or a lens group obtained in step S1; and
S3. designing the Fresnel lens or the meta lens according to the phase distribution obtained in step S2.

According to the present invention, the Fresnel lens or the meta lens is designed by extracting the phase distribution of a common lens group in the optical system for holographic storage. Since the phase distribution is extracted from the common lens group in the optical system holographic, the designed Fresnel lens or meta lens is highly matched with the lens or lens group required in the optical system, and thus can be used alone to replace the corresponding lens or lens group. The Fresnel lens or meta lens itself has the advantages of small thickness, small mass, strong convergence ability, high functional integration degree and low quantitative production cost, which is beneficial for solving the technical problems that the structure is complicated and servo control is difficult caused by the large number of optical elements applied in the holographic optical system and the large required aperture.

For the Fresnel lens, the step S3 in the above-mentioned design method is specifically includes dividing the phase distribution by $m \cdot 2\pi$ and taking the remainder to obtain a compressed phase distribution, wherein m is 5-50, and designing the Fresnel lens according to the obtained compressed phase distribution and the formula

$$h = \frac{\varphi}{2\pi} \cdot \frac{\lambda}{(n-n_0)}$$

, wherein n is the refractive index of the material of the Fresnel lens, $n_0$ is the refractive index of an environmental medium, $\varphi$ is the phase modulation distribution of the Fresnel lens for incident parallel light beams, $\lambda$ is the wavelength of incident light, and h is the thickness of any point on the refractive surface of an annular band relative to the lowest point thereof.

For the meta lens, the step S3 in the above-mentioned design method is specifically includes designing nanometer antennae and a layout thereof according to the phase distribution to obtain the meta lens. The meta lens of the present invention achieves phase regulation and control by plasmon resonance or dielectric resonance. The light is coupled to an electromagnetic wave propagating back and forth along the surface or inside of the nanometer antenna so as to regulate and control the transmitted or reflected light by an oscillating mode on the nanometer antenna. For a single nanometer antenna, the phase of the light wave can be changed by adjusting its shape, size, inclination angle, etc.

Some light paths require the Fresnel lens or the meta lens to have a deflection effect, for example, after passing through the reference light objective lens which is composed of the Fresnel lens or the meta lens, the reference light changes in direction and converges to the direction of the signal light at a certain angle; or after passing through the third Fourier lens, which is composed of the Fresnel lens or the meta lens, the signal light changes in direction and converges to the direction of the reference light at a certain angle.

For a light path requiring the Fresnel lens or the meta lens to have the deflection effect, the design method for such Fresnel lens or meta lens includes the following steps:

R1. optimizing the optical design of the reference light objective lens or the third Fourier lens, and in the optimization process, setting deflection phase modulation at an appropriate position behind the reference light objective lens or the third Fourier lens so as to deflect the lights into a required direction, thereby obtaining a lens or a lens group meeting the optical performance requirements;
R2. extracting a lens phase distribution accumulated when parallel light passes through the lens or lens group obtained in step R1 and propagates to a plane where a deflection phase is located, and superimposing the deflection phase distribution of the deflection phase modulation obtained in step R1 on the lens phase distribution to obtain a deflection lens phase distribution; and
R3. designing the Fresnel lens or the meta lens according to the deflection lens phase distribution obtained in step R2.

For a deflection Fresnel lens, the step R3 in the above-mentioned design method is specifically includes dividing the deflection lens phase distribution by $m \cdot 2\pi$ and taking the remainder to obtain a compressed deflection lens phase distribution, wherein m is 5-50; and designing the Fresnel lens according to the obtained compressed deflection lens phase distribution and the formu-

$$h = \frac{\varphi}{2\pi} \cdot \frac{\lambda}{(n-n_0)}$$

la , wherein n is the refractive index of the material for making the Fresnel lens, n0 is the refractive index of an environmental medium, φ is the phase modulation distribution of the Fresnel lens for incident parallel light beams, λ is the wavelength of incident light, and h is the thickness of any point on the refractive surface of an annular band relative to the lowest point thereof.

For a deflection meta lens, the step R3 in the above-mentioned design method is specifically includes designing nanometer antennae and a layout thereof according to the deflection lens phase distribution to obtain the meta lens.

The Fresnel lens or the meta lens in the present invention can replace an optical element in an on-axis optical system, can also replace an optical element in an off-axis optical system, and can also replace an optical element for holographic storage where a reference light path partially overlaps with a signal light path.

The present invention can obtain the beneficial effects as follows.

According to the present invention, The Fresnel lens or the meta lens is used as the optical element in the optical system for holographic storage, so that the lens surface structure can be designed with a large degree of freedom. The performance of the lens can be continuously optimized through theoretical design or simulation design, so that the lens with a high optical performance can be obtained more easily.

According to the present invention, the Fresnel lens or the meta lens has small volume and small mass, so that it is easier to realize miniaturization and integration of holographic optical storage device on the premise of satisfying the function and performance of the lens.

According to the present invention, the Fresnel lens or the meta lens has small volume and small mass, so that it is more conducive to control the lens by the servo drive system, which achieves fast movement or rotation to compensate for the volume change or deviation of the optical disk.

According to the present invention, the Fresnel lens or the meta lens is designed by extracting the lens phase distribution of a common lens group in the holographic optical storage light path system. Since the lens phase distribution is extracted from the common lens group in optical system, the designed Fresnel lens or meta lens is highly matched with the lens or lens group required in the optical system, which thus can be used alone to replace the corresponding lens or lens group. The Fresnel lens or meta lens itself has the advantages of small thickness, small mass, strong convergence ability, high functional integration degree and low quantitative production cost, which is beneficial for solving the technical problems that the structure is complicated and servo control is difficult caused by the large number of optical elements applied in the holographic optical system and the large required aperture.

**BRIEF DESCRIPTION OF THE DRAWINGS**

FIG. 1 is a schematic diagram showing a meta lens or a Fresnel lens in place of a common optical lens group.

FIG. 2 is a schematic diagram showing a Fresnel lens or a meta lens as a first Fourier lens and a second Fourier lens.

FIG. 3 is a schematic diagram showing a Fresnel lens or a meta lens as a third Fourier lens.

FIG. 4 is a schematic diagram showing a Fresnel lens or a meta lens as the third Fourier lens and a reference light objective lens.

FIG. 5 is another schematic diagram showing a Fresnel lens or a meta lens as the third Fourier lens and the reference light objective lens.

FIG. 6 is another schematic diagram showing a Fresnel lens or a meta lens as the third Fourier lens and the reference light objective lens.

FIG. 7 is a schematic diagram of an optical system for holographic storage containing a Fresnel lens or a meta lens.

FIG. 8 is another schematic diagram of an optical system for holographic storage containing a Fresnel lens or a meta lens.

FIG. 9 is a schematic diagram showing a Fresnel lens or a meta lens as a Fourier lens for on-axis hologram recording.

FIG. 10 is a schematic diagram of a design method for a Fresnel lens or a meta lens in the optical system of holographic storage.

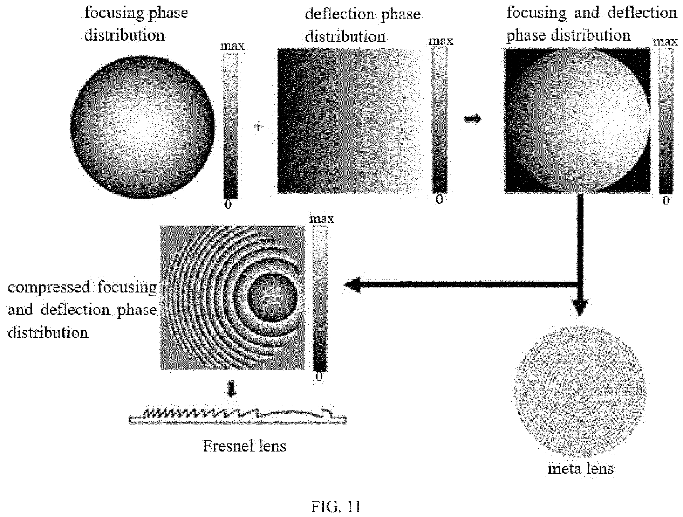

FIG. 11 is a schematic diagram of a design method for a deflection Fresnel lens or a deflection meta lens in the optical system for holographic storage.

**DETAILED DESCRIPTION**

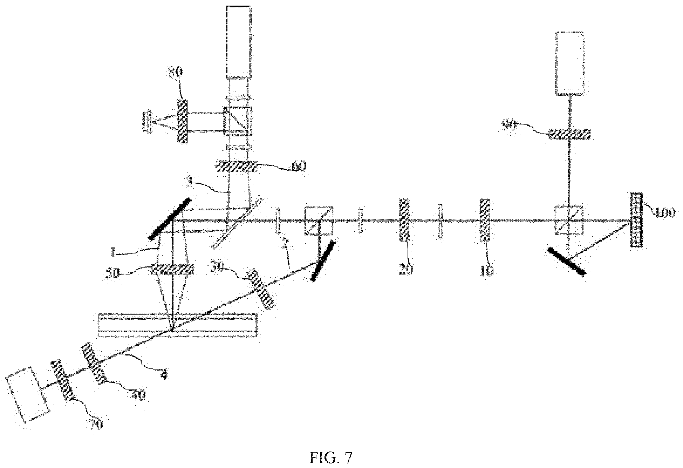

An optical system for holographic storage containing a Fresnel lens or a meta lens is provided according to at least one embodiment. Referring to FIG. 7, the optical system includes a reference light path 1, a signal light path 2, a servo light path 3 and a reproduction light path 4. The reference light path 1 and the signal light path 2 both contains a first Fourier lens 10 and a second Fourier lens 20 for transmitting reference light 1 and signal light 2 carrying data information and adjusting the incident position and angle of the reference light 1 and the signal light 2 on a storage medium. In the present embodiment, the reference light path 1 and the signal light path 2 partially overlap, the first Fourier lens 10 and the second Fourier lens 20 are disposed at the overlapping position, that is, the reference light path 1 and the signal light path 2 share the first Fourier lens 10 and the second Fourier lens 20.

The optical system further includes a reference light objective lens 50 for converging the reference light, a third Fourier lens 30 for performing Fourier transformation on a signal light field, a fourth Fourier lens 40 for performing Fourier transformation on a reproduced signal light field to read the data information, a magnification lens 70 for matching pixel sizes of a spatial light modulator and an image sensor, a servo light objective lens 50 for focusing a servo light, a servo light calibration lens 60 for calibrating a servo light spot, an astigmatic cylindrical lens 80 for detecting defocusing condition of the servo light by astigmatism, a beam expanding collimating lens group 90 for performing beam expanding on the reference light and the signal light, and a spatial light modulator 100 for loading the data information onto the signal light.

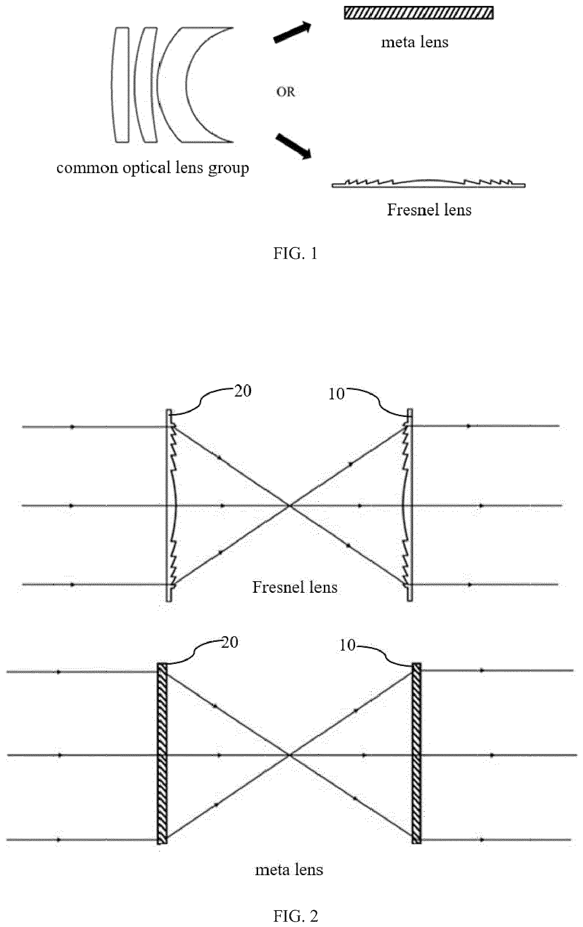

The first Fourier lens 10 and the second Fourier lens 20 are composed of a Fresnel lens or a meta lens according to at least one embodiment. As shown in FIG. 2, the reference light and the signal light are Fourier-transformed by the first Fourier lens 10 and then converge on the focal plane thereof, and after filtering, the reference light and the signal light are Fourier-transformed by the second Fourier lens 20 and transferred to the focal plane thereof. With such configuration, the size of a hologram thus can be controlled by filtering of a Fourier transform system formed by the first and second Fourier lenses.

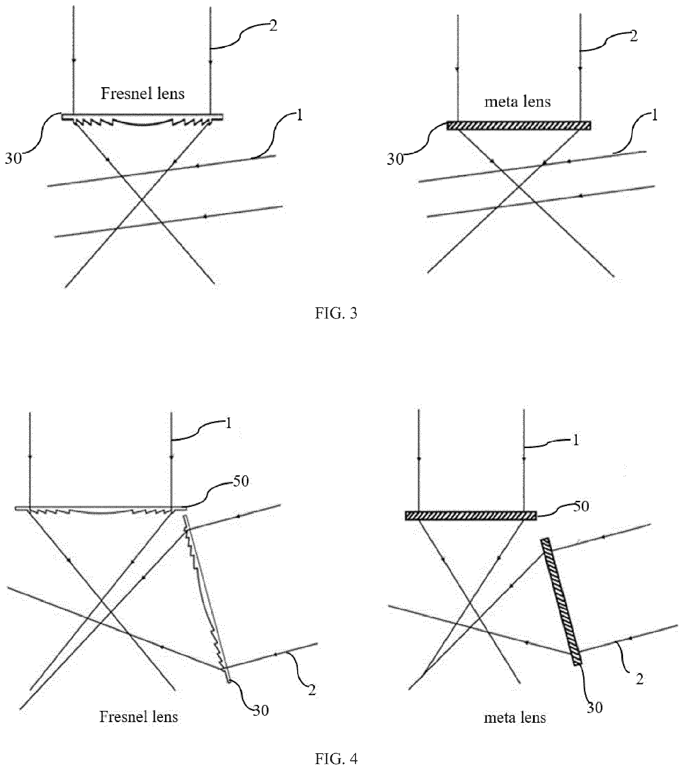

As shown in FIG. 3, the third Fourier lens 30 is composed of a Fresnel lens or a meta lens according to at least one embodiment. As shown in FIG. 4, both the third Fourier lens 30 and the reference light objective lens 50 consist of a Fresnel lens or a meta lens according to at least one embodiment. The signal light is Fourier-transformed by the third Fourier lens 30 and then converges to the focal plane thereof which is located inside the storage medium. After passing through the reference light objective lens 50, the reference light converges to the front focal point of the reference light objective lens 50 in the direction of the original optical axis, and continues to propagate to form a divergent spherical wave. The signal light then interferes with the reference light inside the storage medium to form holograms by exposure.

Referring to FIG. 1, The Fourier lens has the function requirement of transmitting the data information completely, while the reference light objective lens requires a higher numerical aperture and a larger working distance, so its aperture is larger. Meanwhile, since it is necessary to eliminate the influence of aberration, the Fourier lens and the reference light objective lens are generally a lens group consisting of a plurality of lenses, which are large in volume and mass. However, it can considerably reduce the lens volume and mass when designed as the Fresnel lens or the meta lens. On the one hand, reduction of volume and mass facilitates miniaturization of the entire optical system, on the other hand, it is advantageous to compensate for the expansion or contraction and deviation of the optical disk by controlling the movement of the lens through a servo system. The expansion or contraction of the holographic optical disk includes volume contraction due to polymerization of photopolymer monomers into macromolecules after writing in data and a volume change due to a temperature change, such volume change may cause a change to holographic grating. The deviation of the optical disk includes translational deviation in the direction of three axes and angular deviation around the three axes. In order to compensate for the effects of the volume change and the deviation of the holographic optical disk to fully reproduce the stored data information, compensation may be performed by controlling the movement or rotation of the lens, such as the second Fourier lens or other lenses, on the light path. Moreover, in order to facilitate control and achieve fast response, the volume and mass of these lenses should be reduced as much as possible, accordingly, replacing a conventional lens or lens group with the Fresnel lens and the meta lens is an important or even the unique method.

According to one preferable embodiment, the servo light calibration lens 60 is a Fresnel lens or a meta lens.

The servo light calibration lens 60 is configured for adjusting the position of a convergence light spot of the servo light. In the calibration process, the servo light calibration lens 60 needs to be frequently moved to complete the focusing of the servo light. The Fresnel lens or the meta lens in place of the common calibration lens thus can greatly reduce the volume and mass of the lens, which is more conducive to rapid movement of the servo light calibration lens 60.

According to one preferable embodiment, the servo light objective lens 50 is a Fresnel lens or a meta lens. As shown in Fig.7, the servo light objective lens 50 and the reference light objective lens are the same lens.

The configuration of the servo light objective lens 50 being a Fresnel lens or a meta lens simplifies the volume of the lens, reduces the mass of the lens, facilitates miniaturization and integration of the system, and facilitates rapid movement of the servo light objective lens.

According to one preferable embodiment, the magnification lens 70 is a Fresnel lens or a meta lens.

According to one preferable embodiment, the beam expanding collimating lens group is composed of a Fresnel lens or a meta lens, which reduces the volume and facilitates miniaturization and integration of the system.

According to one preferable embodiment, the astigmatic cylindrical lens 80 is a Fresnel lens or a meta lens.

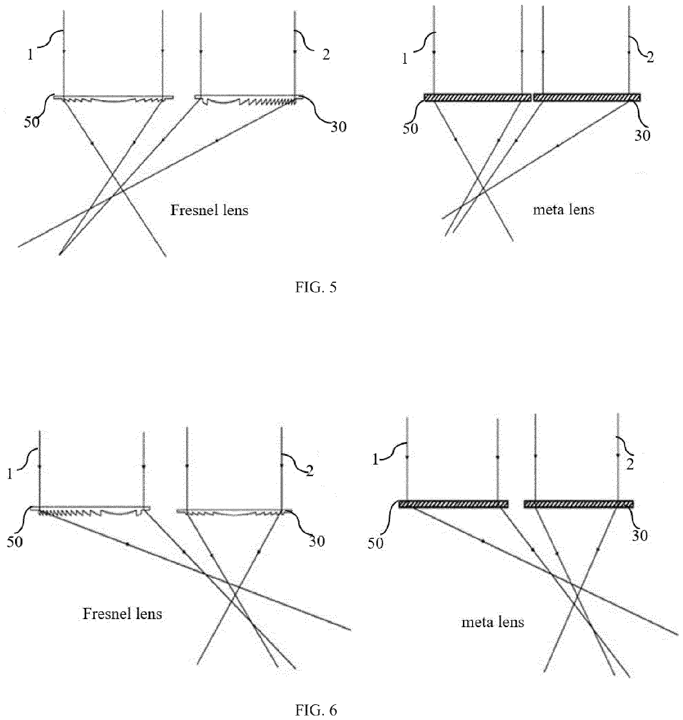

FIG. 5 provides an embodiment that the third Fourier lens 30 and the reference light objective lens 50 are both composed of a Fresnel lens or a meta lens. By designing the surface structure of the Fresnel lens or the meta lens, after passing through the reference light objective lens 50, the reference light converges to the front focal point of the reference light objective lens 50 in the direction of the original optical axis; and after the signal light passes through the third Fourier lens 30, the signal light changes in direction and converges to the direction of the reference light at a certain angle.

FIG. 6 provides another embodiment that the third Fourier lens 30 and the reference light objective lens 50 are composed of a Fresnel lens or a meta lens. By designing the surface structure of the Fresnel lens or the meta lens, after passing through the third Fourier lens 30, the signal light converges to the front focal point of the reference light objective lens 50 in the direction of the original optical axis, and after the reference light passes through the reference light objective lens 50, the reference light changes in direction and converges to the direction of the signal light at a certain angle.

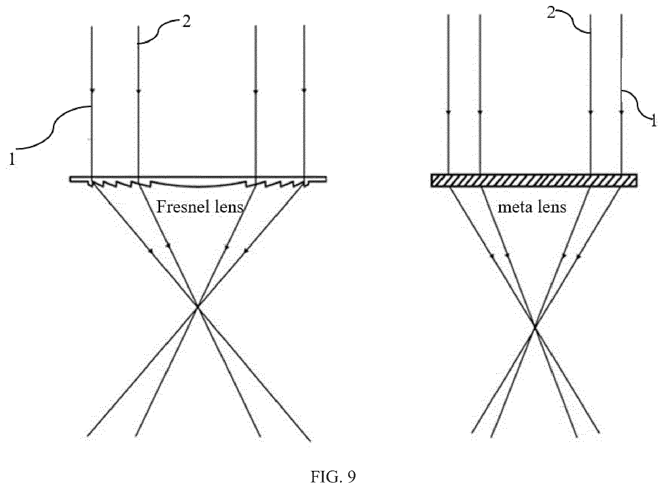

The Fresnel lens or the meta lens may also be applicable to an on-axis optical system for holographic storage. As shown in FIG. 9, the reference light and the signal light have the same symmetry axis. The third Fourier lens and the reference light objective lens are the same lens.

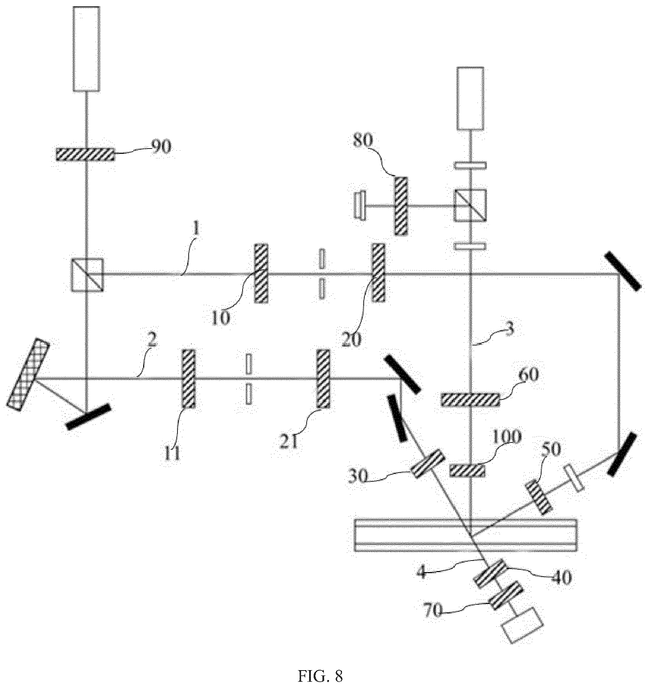

The Fresnel lens or the meta lens may also be applicable to other off-axis optical system for holographic storage. As shown in FIG. 8, the reference light and the signal light are not coaxial, and the servo light is not coaxial with the reference light and the signal light, either.

FIG. 9 provides a design method for a Fresnel lens and a meta lens applied in the above optical system for holographic storage, which includes the following steps:

> S1. optimizing the optical design of the optical system for holographic storage to obtain a lens or a lens group meeting the optical performance requirements;
> S2. extracting a phase distribution accumulated after parallel lights pass through the lens or lens group obtained in step S1; and
> S3. designing the Fresnel lens or the meta lens according to the phase distribution obtained in step S2.

For the Fresnel lens, the step S3 specifically includes dividing the phase distribution by $m \cdot 2\pi$ and taking the remainder to obtain a compressed phase distribution. The larger the value of m, the less the order of the Fresnel lens (i.e. the less the number of the annular band), the wider the annular band, and the greater the thickness of the annular band; the smaller the value of m, the greater the order of the Fresnel lens (i.e. the greater the number of the annular band), the narrower the annular band, and the smaller the thickness of the annular band. However, when the value of m is too large or too small, it is difficult to manufacture the Fresnel lens. The value of m in this embodiment is 5-50. Designing the Fresnel lens according to the obtained compressed

$$h = \frac{\varphi}{2\pi} \cdot \frac{\lambda}{(n - n_0)},$$

phase distribution and the formula wherein n is the refractive index of the material of the Fresnel lens, n$_0$ is the refractive index of an environmental medium, $\varphi$ is the phase modulation distribution of the Fresnel lens for incident parallel light beams, $\lambda$ is the wavelength of incident light, and h is the thickness of any point on the refractive surface of the annular band relative to the lowest point thereof.

For the meta lens, the step S3 specifically includes designing the nanometer antennae and a layout thereof according to the phase distribution to obtain the meta lens. The meta lens of the present invention achieves phase regulation and control by plasmon resonance or dielectric resonance. The light is coupled to an electromagnetic wave propagating back and forth along the surface or inside of the nanometer antenna so as to regulate and control the transmitted or reflected light by an oscillating mode on the nanometer antenna. The optical nanometer antennae of the meta lens may be nano-structures such as holes, slits or protrusions. The optical meta lens can regulate and control the amplitude, phase, polarization and transmission spectrum of light in the sub-wavelength range through the interaction of the nanostructure unit with light.

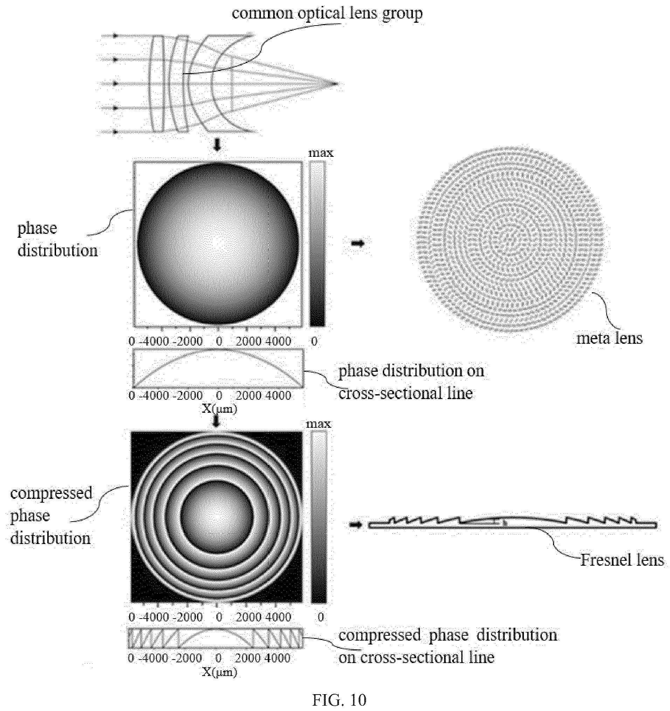

FIG. 10 provides another design method for a Fresnel lens and a meta lens applied in the optical system for holographic storage includes the following steps:

> R1. optimizing the optical design of a reference light objective lens or a third Fourier lens, and in the optimization process, setting deflection phase modulation at an appropriate position behind the reference light objective lens or the third Fourier lens so as to deflect light into a required direction, thereby obtaining a lens or a lens group meeting the optical performance requirements;
> R2. extracting a lens phase distribution accumulated when parallel lights pass through the lens or lens group obtained in step R1 and propagates to a plane where a deflection phase is located, and superimposing the deflection phase distribution by the deflection phase modulation obtained in step R1 on the lens phase distribution to obtain a deflection lens phase distribution; and
> R3. designing the Fresnel lens or the meta lens according to the deflection lens phase distribution obtained in step R2.

For a deflection Fresnel lens, the step R3 specifically includes dividing the deflection lens phase distribution by $m \cdot 2\pi$ and taking the remainder to obtain a compressed deflection lens phase distribution. The larger the value of m, the less the order of the Fresnel lens (i.e. the less the number of the annular band), the wider the annular band, and the greater the thickness of the annular band; the smaller the value of m, the greater the order of the Fresnel lens (i.e. the greater the number of the annular band), the narrower the annular band, and the smaller the thickness of the annular band. However, when the value of m is too large or too small, it is difficult to manufacture the Fresnel lens. The value of m in this embodiment is 5-50. The Fresnel lens is designed according to the obtained compressed deflection lens phase distribution and the formula

$$h = \frac{\varphi}{2\pi} \cdot \frac{\lambda}{(n-n_0)},$$

wherein n is the refractive index of the material for making the Fresnel lens, n0 is the refractive index of an environmental medium, $\varphi$ is the phase modulation distribution of the Fresnel lens for incident parallel light beams, $\lambda$ is the wavelength of incident light, and h is the thickness of any point on the refractive surface of the annular band relative to the lowest point thereof.

For a deflection meta lens, the step R3 specifically includes designing nanometer antennae and a layout thereof according to the deflection lens phase distribution to obtain the meta lens. The meta lens of the present invention achieves phase regulation and control by plasmon resonance or dielectric resonance. The light is coupled to an electromagnetic wave propagating back and forth along the surface or inside of the nanometer antenna to regulate and control the transmitted or reflected light by an oscillating mode on the nanometer antenna. The optical nanometer antennae constituting the meta lens may be nano-structures such as holes, slits or protrusions. The optical meta lens can regulate and control the amplitude, phase, polarization and transmission spectrum of light in the sub-wavelength range through the interaction of the nanostructure unit with light.

## Claims

1. An optical system for holographic storage, comprising a reference light path (1), a signal light path (2), a servo light path (3) and a reproduction light path (4),

   wherein the reference light path (1) and the signal light path (2) both contains a first Fourier lens (10) and a second Fourier lens (20) for transmitting a reference light and a signal light carrying data information, and adjusting an incident position and angle of the reference light and the signal light on a storage medium,
   wherein the optical system further comprises:

   a reference light objective lens (50) for converging the reference light;
   a third Fourier lens (30) for performing Fourier transformation on a signal light field; and
   a fourth Fourier lens (40) for performing Fourier transformation on a reproduced signal light field to read the data information, and

   wherein the first Fourier lens (10), the second Fourier lens (20), the third Fourier lens (30), the fourth Fourier lens (40) and the reference light objective lens (50) is respectively composed of a Fresnel lens or a meta lens.

2. The optical system according to claim 1, further comprising a servo light calibration lens (60) which is configured for calibrating a servo light spot, the calibration lens being a Fresnel lens or a meta lens.

3. The optical system according to claim 1, further comprising a servo light objective lens which is configured for focusing a servo light, the servo light objective lens being a Fresnel lens or a meta lens.

4. The optical system according to claim 1, further comprising a magnification lens (70) for matching pixel sizes of a spatial light modulator (100) and an image sensor, the magnification lens (70) being a Fresnel lens or a meta lens.

5. The optical system according to claim 1, wherein the reference light path (1) and the signal light path (2) further comprise a beam expanding collimating lens group (90) for performing beam expanding on the reference light and the signal light, and the beam expanding collimating lens group (90) is composed of a Fresnel lens or a meta lens.

6. The optical system according to claim 1, further comprising an astigmatic cylindrical lens (80) for detecting defocusing condition of a servo light using astigmatism, the astigmatic cylindrical lens (80) being a Fresnel lens or a meta lens.

7. The optical system according to any one of Claims 1-6, wherein after passing through the reference light objective lens (50), the reference light changes in direction and converges to the direction of the signal light at a certain angle.

8. The holographic optical storage light path system according to any one of Claims 1-6, wherein after passing through the third Fourier lens (30), the signal light changes in direction and converges to the direction of the reference light at a certain angle.

9. A design method for a Fresnel lens and a meta lens used in the optical system for holographic storage according to any one of claims 1-6, comprising the following steps:

   S1. optimizing optical design of the optical system for holographic storage to obtain a lens or lens group meeting optical performance requirements;

S2. extracting a phase distribution accumulated after parallel lights pass through the lens or lens group obtained in step S1; and

S3. designing the Fresnel lens or the meta lens according to the phase distribution obtained in step S2.

10. The design method according to claim 9, wherein the step S3 includes:

dividing the phase distribution by m·2π and taking the remainder to obtain a compressed phase distribution, wherein m is 5-50;
designing the Fresnel lens according to the obtained compressed phase distribution and a formula $h = \dfrac{\varphi}{2\pi} \cdot \dfrac{\lambda}{(n-n_0)}$, wherein n is a refractive index of material of the Fresnel lens, $n_0$ is a refractive index of an environmental medium, φ is the phase modulation distribution of the Fresnel lens for incident parallel light beams, λ is wavelength of the incident light, and h is a thickness of any point on the refractive surface of an annular band relative to the lowest point thereof; and/or
designing nanometer antennae and a layout thereof according to the phase distribution to obtain the meta lens.

11. A design method for a Fresnel lens and a meta lens used in the optical system for holographic storage according to claim 7 or 8, comprising the following steps:

R1. optimizing optical design of the reference light objective lens (50) or the third Fourier lens (30) by setting deflection phase modulation at an appropriate position behind the reference light objective lens (50) or the third Fourier lens (30) to deflect the reference light or the signal light into a required direction, and thus obtaining a lens or a lens group meeting optical performance requirements;
R2. extracting a lens phase distribution accumulated when parallel lights passthrough the lens or the lens group obtained in step R1 and propagates to a plane where a deflection phase is located, and superimposing the deflection phase distribution by the deflection phase modulation in step R1 on the lens phase distribution to obtain a deflection lens phase distribution; and
R3. designing the Fresnel lens or the meta lens according to the deflection lens phase distribution obtained in step R2.

12. The design method according to claim 11, wherein the step R3 includes:

dividing the deflection lens phase distribution by m·2π and taking the remainder to obtain a compressed deflection lens phase distribution, wherein m is 5-50;
designing the Fresnel lens according to the obtained compressed deflection lens phase distribution and a formula $h = \dfrac{\varphi}{2\pi} \cdot \dfrac{\lambda}{(n-n_0)}$, wherein n is a refractive index of material for making the Fresnel lens, $n_0$ is a refractive index of an environmental medium, φ is the phase modulation distribution of the Fresnel lens for incident parallel light beams, λ is a wavelength of incident light, and h is a thickness of any point on the refractive surface of an annular band relative to the lowest point thereof; and/or
designing nanometer antennae and a layout thereof according to the deflection lens phase distribution to obtain the meta lens.

meta lens

OR

common optical lens group

Fresnel lens

FIG. 1

20          10

Fresnel lens

20          10

meta lens

FIG. 2

FIG. 3

FIG. 4

FIG. 5

FIG. 6

FIG. 7

FIG. 8

FIG. 9

common optical lens group

phase
distribution

max

0

0 -4000 -2000   0   2000 4000

meta lens

phase distribution on
cross-sectional line

0 -4000 -2000   0   2000 4000
X(μm)

compressed
phase
distribution

max

0

0 -4000 -2000   0   2000 4000

Fresnel lens

compressed phase distribution
on cross-sectional line

0 -4000 -2000   0   2000 4000
X(μm)

FIG. 10

focusing phase distribution

deflection phase distribution

focusing and deflection phase distribution

compressed focusing and deflection phase distribution

Fresnel lens

meta lens

FIG. 11

Europäisches
Patentamt

European
Patent Office

Office européen
des brevets

## EUROPEAN SEARCH REPORT

**Application Number**

EP 22 19 0206

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/212859 A1 (TSUKAGOSHI TAKUYA [JP]) 28 October 2004 (2004-10-28) | 1-8 | INV. G11B7/1374 G11B7/1378 |
| A | * paragraph [0023] - paragraph [0065]; figures 1-4 * | 9-12 | |
| X | US 2021/225400 A1 (ZHENG MU [CN] ET AL) 22 July 2021 (2021-07-22) | 1-8 | |
| A | * paragraph [0056] - paragraph [0066]; figure 7 * | 9-12 | |
| X | US 2020/174163 A1 (HAN SEUNGHOON [KR] ET AL) 4 June 2020 (2020-06-04) | 9-12 | |
| A | * paragraph [0071] - paragraph [0119]; figures 1-11 * | 1-8 | |
| A | WO 2021/118794 A2 (UNIV CALIFORNIA [US]) 17 June 2021 (2021-06-17) * paragraph [0004] - paragraph [0006] * * paragraph [0020] - paragraph [0042]; figures 1-12 * | 1-12 | |
| A | US 2018/274750 A1 (BYRNES STEVE [US] ET AL) 27 September 2018 (2018-09-27) * paragraph [0035] - paragraph [0178]; figures 1-21 * | 1-12 | **TECHNICAL FIELDS SEARCHED (IPC)** G11B |

The present search report has been drawn up for all claims

| Place of search | Date of completion of the search | Examiner |
|---|---|---|
| The Hague | 9 January 2023 | Skaropoulos, N |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

....................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 19 0206

This annex lists the patent family members relating to the patent documents cited in the above-mentioned European search report.
The members are as contained in the European Patent Office EDP file on
The European Patent Office is in no way liable for these particulars which are merely given for the purpose of information.

09-01-2023

| Patent document cited in search report | | | Publication date | Patent family member(s) | | | Publication date |
|---|---|---|---|---|---|---|---|
| US 2004212859 | A1 | | 28-10-2004 | CN | 1540458 | A | 27-10-2004 |
| | | | | EP | 1471507 | A2 | 27-10-2004 |
| | | | | JP | 3924549 | B2 | 06-06-2007 |
| | | | | JP | 2004326897 | A | 18-11-2004 |
| | | | | US | 2004212859 | A1 | 28-10-2004 |
| US 2021225400 | A1 | | 22-07-2021 | CN | 111081282 | A | 28-04-2020 |
| | | | | EP | 3855437 | A1 | 28-07-2021 |
| | | | | JP | 7144550 | B2 | 29-09-2022 |
| | | | | JP | 2021118024 | A | 10-08-2021 |
| | | | | KR | 20210095031 | A | 30-07-2021 |
| | | | | SG | 10202100404R | A | 30-08-2021 |
| | | | | US | 2021225400 | A1 | 22-07-2021 |
| US 2020174163 | A1 | | 04-06-2020 | CN | 111257975 | A | 09-06-2020 |
| | | | | EP | 3663808 | A1 | 10-06-2020 |
| | | | | US | 2020174163 | A1 | 04-06-2020 |
| WO 2021118794 | A2 | | 17-06-2021 | NONE | | | |
| US 2018274750 | A1 | | 27-09-2018 | CN | 108291983 | A | 17-07-2018 |
| | | | | EP | 3353578 | A1 | 01-08-2018 |
| | | | | EP | 3825738 | A2 | 26-05-2021 |
| | | | | JP | 6748197 | B2 | 26-08-2020 |
| | | | | JP | 2018537804 | A | 20-12-2018 |
| | | | | US | 2017082263 | A1 | 23-03-2017 |
| | | | | US | 2018274750 | A1 | 27-09-2018 |
| | | | | US | 2019137075 | A1 | 09-05-2019 |
| | | | | WO | 2017053309 | A1 | 30-03-2017 |

EPO FORM P0459

For more details about this annex : see Official Journal of the European Patent Office, No. 12/82